# EUROPEAN PATENT APPLICATION

(11) **EP 4 355 017 A1**
(43) Date of publication of application: **17.04.2024**
(21) Application number: 22841509.7
(22) Date of filing: 15.07.2022
(51) Int. Cl.: H04W 76/28, H04W 52/02

(54) **POWER-SAVING SIGNAL MONITORING METHOD AND APPARATUS, AND DEVICE AND MEDIUM**

(30) Priority: 15.07.2021 CN 202110801578
(71) Applicant: Vivo Mobile Communication Co., Ltd., Dongguan, Guangdong 523863 (CN)
(72) Inventor: WANG, Yangyang, Dongguan, Guangdong 523863 (CN); BAO, Wei, Dongguan, Guangdong 523863 (CN); CHEN, Li, Dongguan, Guangdong 523863 (CN); LIU, Xuanbing, Dongguan, Guangdong 523863 (CN)
(74) Representative: Murgitroyd & Company
(86) International application number: PCT/CN2022/106103
(87) International publication number: WO 2023/284876

(57) **Abstract**

The application discloses a power-saving signal monitoring method and apparatus, a device, and a medium, and pertains to the field of communication technologies. The power-saving signal monitoring method in embodiments of this application includes: receiving, by a UE, indication information from a network-side device, where the indication information is used to indicate whether a power-saving signal is applicable to a target cell range, and the UE supports the power-saving signal; and determining, by the UE based on the indication information, whether to monitor the power-saving signal in a current camping cell.

## Description

### CROSS-REFERENCE TO RELATED APPLICATION

This application claims priority to Chinese Patent Application No. 202110801578.7, filed in China on July 15, 2021, which is incorporated herein by reference in its entirety.

### TECHNICAL FIELD

This application pertains to the field of communications technologies, and specifically relates to a power-saving signal monitoring method and apparatus, a device, and a medium.

### BACKGROUND

At present, the applicable scope of power-saving signals (such as wake-up signals (Wake-up signal, WUS)) has not been determined yet. If the WUS is limited to the cell that the UE serving last time (that is, the cell with which the UE last established a connection with the network) according to the LTE scheme, then when the UE moves to another cell, it cannot use the power-saving signal and cannot enjoy the energy-saving gain brought by the power-saving signal.

However, if it is agreed that UEs supporting power-saving signals can monitor power-saving signals in any cell supporting power-saving signals before receiving a paging message, when there are many UEs with high mobility and/or UEs with high latency requirements in the network, numerous non-paged UEs in the tracking area list and/or radio access network notification area need to wake up and monitor the power-saving signals, leading to increased energy consumption.

### SUMMARY

Embodiments of this application provide a power-saving signal monitoring method and apparatus, a device, and a medium, to address the issue of unnecessary power consumption during the process of power-saving signal monitoring.

According to a first aspect, a power-saving signal monitoring method is provided, including: receiving, by a UE, indication information from a network-side device, where the indication information is used to indicate whether a power-saving signal is applicable to a target cell range, and the UE supports the power-saving signal; and determining, by the UE based on the indication information, whether to monitor the power-saving signal in the current camping cell.

According to a second aspect, a power-saving signal monitoring method is provided, including: receiving, by a user equipment UE, indication information transmitted by a network-side device; and monitoring, by the UE, a power-saving signal in a case that the UE determines that a last serving cell is a first cell based on the indication information; where the network-side device is a network-side device corresponding to the first cell, and the first cell is a current camping cell.

According to a third aspect, a power-saving signal monitoring method is provided, including: determining, by a network-side device, indication information based on target information; and transmitting, by the network-side device, the indication information to a UE; where the indication information is used to indicate whether a power-saving signal is applicable to a target cell range; the UE supports the power-saving signal; and the network-side device supports the power-saving signal.

According to a fourth aspect, a power-saving signal monitoring method is provided, including: transmitting, by a network-side device, indication information to a user equipment UE, where the indication information is used for the UE to monitor a power-saving signal in a case of determining that a last serving cell is a first cell, and the network-side device is a network-side device corresponding to the first cell; where the first cell is a current camping cell and the first cell is determined based on the indication information.

According to a fifth aspect, a power-saving signal monitoring apparatus is provided, including: a receiving module, configured to receive indication information from a network-side device, where the indication information is used to indicate whether a power-saving signal is applicable to a target cell range; and a monitoring module, configured to determine, based on the indication information received by the receiving module, whether to monitor the power-saving signal in a current camping cell.

According to a sixth aspect, a power-saving signal monitoring apparatus is provided, including: a receiving module, configured to receive indication information transmitted by a network-side device; and a monitoring module, configured to monitor a power-saving signal in a case that a user equipment UE determines that a last serving cell is a first cell based on the indication information; where the network-side device is a network-side device corresponding to the first cell, and the first cell is a current camping cell.

According to a seventh aspect, a power-saving signal monitoring apparatus is provided, including: a determining module, configured to determine indication information based on target information; and a transmitting module, configured to transmit the indication information determined by the determining module to a UE; where the indication information is used to indicate whether a power-saving signal is applicable to a target cell range; and the UE supports the power-saving signal.

According to an eighth aspect, a power-saving signal monitoring apparatus is provided, including: a transmitting module, configured to transmit indication information to a user equipment UE, where the indication information is used for the UE to monitor a power-saving signal in a case of determining that a last serving cell is a first cell, and a network-side device is a network-side device corresponding to the first cell; where the first cell is a current camping cell and the first cell is determined based on the indication information.

According to a ninth aspect, a terminal is provided, where the terminal includes a processor, a memory, and a program or instructions stored in the memory and executable on the processor, and when the program or instructions are executed by the processor, steps of the method according to the first aspect are implemented.

According to a tenth aspect, a terminal is provided, including a processor and a communication interface, where the communication interface is configured to receive indication information from a network-side device; the indication information is used to indicate whether a power-saving signal is applicable to a target cell range; and the processor is configured to determine whether to monitor the power-saving signal based on the indication information received by the receiving module.

According to an eleventh aspect, a network-side device is provided, where the network-side device includes a processor, a memory, and a program or instructions stored in the memory and executable on the processor, where when the program or instructions are executed by the processor, steps of the method according to the second aspect are implemented.

According to a twelfth aspect, a network-side device is provided, including a processor and a communication interface, where the processor is configured to determine indication information based on target information; and the communication interface is configured to transmit the indication information determined by the determining module to a UE; where the indication information is used to indicate whether a power-saving signal is applicable to a target cell range; and the UE supports the power-saving signal, that is, having the ability to receive/detect/monitor the power-saving signal.

According to a thirteenth aspect, a readable storage medium is provided, where a program or instructions are stored in the readable storage medium; and when the program or the instructions are executed by a processor, steps of the method according to the first aspect are implemented, steps of the method according to the second aspect are implemented, steps of the method according to the third aspect are implemented, or steps of the method according to the fourth aspect are implemented.

According to a fourteenth aspect, a chip is provided, where the chip includes a processor and a communication interface, the communication interface is coupled to the processor, and the processor is configured to run a program or instructions to implement steps of the method according to the first aspect, steps of the method according to the second aspect, steps of the method according to the third aspect, or steps of the method according to the fourth aspect.

According to a fifteenth aspect, a computer program/program product is provided, where the computer program/program product is stored in a non-volatile storage medium, the program/program product is executed by at least one processor to implement steps of the method according to the first aspect, steps of the method according to the second aspect, steps of the method according to the third aspect, or steps of the method according to the fourth aspect.

In the embodiments of this application, the network-side device transmits indication information to a UE capable of receiving power-saving signals, to indicate to the UE whether a power-saving signal is applicable to a target cell range, so that the UE can determine, based on the indication information, whether to monitor the power-saving signal in a current camping cell. This allows the UE to guarantee its own energy-saving gain while minimizing the impact on other UEs.

### BRIEF DESCRIPTION OF DRAWINGS

FIG. 1 is a schematic diagram of a possible architecture of a communication system according to an embodiment of this application;
FIG. 2 is a schematic flowchart of a power-saving signal monitoring method according to an embodiment of this application;
FIG. 3 is a first schematic structural diagram of a power-saving signal monitoring apparatus according to an embodiment of this application;
FIG. 4 is a second schematic structural diagram of a power-saving signal monitoring apparatus according to an embodiment of this application;
FIG. 5 is a third schematic structural diagram of a power-saving signal monitoring apparatus according to an embodiment of this application;
FIG. 6 is a fourth schematic structural diagram of a power-saving signal monitoring apparatus according to an embodiment of this application;
FIG. 7 is a fifth schematic structural diagram of a power-saving signal monitoring apparatus according to an embodiment of this application;
FIG. 8 is a sixth schematic structural diagram of a power-saving signal monitoring apparatus according to an embodiment of this application;
FIG. 9 is a schematic diagram of a hardware structure of a communications device according to an embodiment of this application;
FIG. 10 is a schematic diagram of a hardware structure of a UE according to an embodiment of this application; and
FIG. 11 is a schematic diagram of a hardware structure of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It is worth noting that the technology described in the embodiments of this application is not limited to long term evolution (Long Term Evolution, LTE)/LTE-Advanced (LTE-Advanced, LTE-A) systems, but may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. However, in the following descriptions, a new radio (New Radio, NR) system is described for illustration purposes, NR terms are used in most of the following descriptions, and these technologies may also be applied to other applications than the NR system application, for example, the 6th generation (6^{th} Generation, 6G) communication system.

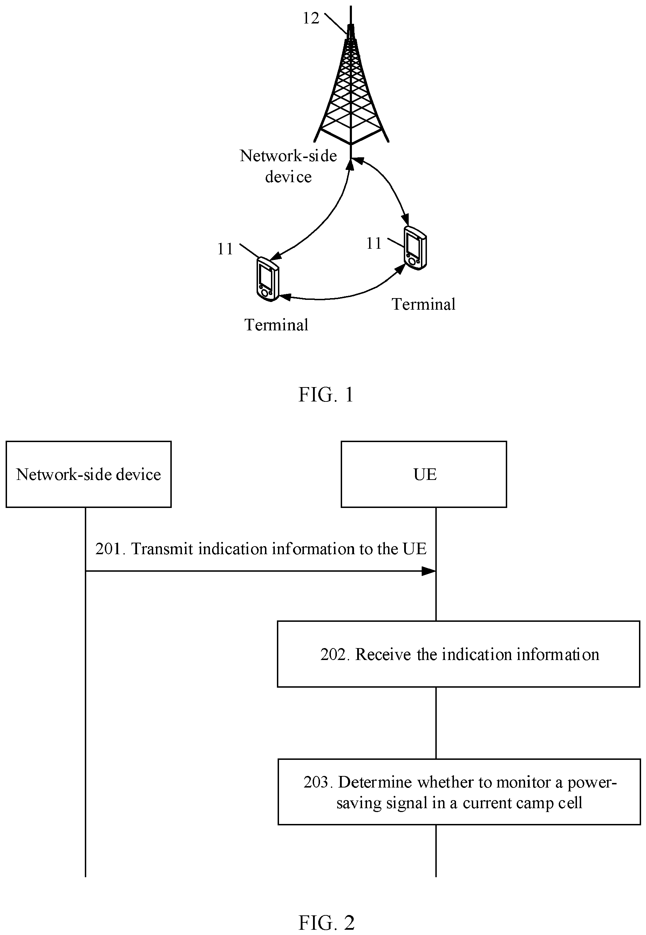

FIG. 1 is a block diagram of a wireless communication system to which the embodiments of this application may be applicable. The wireless communication system includes a terminal 11 and a network-side device 12. The terminal 11 may be a terminal-side device, such as a mobile phone, a tablet personal computer (Tablet Personal Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), a vehicle user equipment (vehicle user equipment, VUE), a pedestrian user equipment (pedestrian user equipment, PUE), a smart home device (household devices with wireless communication functions, such as a refrigerator, a television, a washing machine, or furniture) and the like. The wearable device includes a smart watch, a smart wrist band, a smart headphone, smart glasses, smart jewelry (such as smart bracelet, smart chain bracelet, smart ring, smart necklace, smart anklet, and smart chain anklet), a smart wristband, smart apparel, a gaming machine, and the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or another appropriate term in the art. Provided that the same technical effect is achieved, the base station is not limited to a specific technical term. It should be noted that the base station in the NR system is only used as an example in the embodiments of this application, but a specific type of the base station is not limited.

At present, a network-side device can transmit paging messages to UEs (for example, a UE in idle state, a UE in inactive state, and a UE in connected state). The paging process may have at least one of the following functions, for example, notifying a UE to receive a paging request, notifying of a system information update, and notifying a UE to receive information from an earthquake and tsunami warning system (Earthquake and Tsunami Warning System, ETWS), commercial mobile alert service (Commercial Mobile Alert Service, CMAS), and the like.

In one example, when the network-side device pages a UE in idle state, it will first transmit a paging message in the cell where the UE was last connected to the network-side device. If the UE is not paged successfully, the network-side device gradually expands the paging area, with the paging area eventually expanding to the entire registration area. The foregoing registration area includes a series of tracking areas, and each tracking area includes one or more cells. Generally, the UE updates the registration area periodically or when the UE moves out of the current registration area.

In one example, when the network-side device pages a UE in inactive state, it will first transmit a paging message in the cell where the UE was last connected to the network. If the UE is not paged successfully, the network-side device gradually expands the paging area, with the paging area eventually expanding to the entire radio access network paging area. The foregoing radio access network paging area includes a list of cells or at least one radio access network area identifier.

In one example, for a UE in idle state (RRC_IDLE) or inactive state (RRC_INACTIVE), only one paging occasion (paging occasion, PO) needs to be monitored in one DRX cycle. However, multiple UEs share one PO, that is, multiple UEs monitor a same PO simultaneously. When the network-side device pages a UE, the network-side device transmits a paging message on the PO monitored by the paged UE. Then, all UEs monitoring the PO will receive the paging message. The UEs that receive the paging message need to decode the paging message and then, after decoding the paging message, each of the UEs searches for its own paging message from the paging list in the paging message. Non-paged UEs, due to sharing the same PO with the paged UE, have to decode the paging message transmitted by the network-side device to the paged UE, resulting in energy consumption. When the UE is not in the cell where it was last connected to the network-side device, due to the mobility of the UE, the network-side device may need to transmit the paging message in all cells in the registration area of the paged UE and/or the radio access network paging area, causing the UEs in more cells to wake up to monitor the paging, resulting in energy consumption.

To address the above issue, embodiments of this application provide a power-saving signal monitoring method and apparatus, a device, and a medium. A network-side device transmits indication information to a UE supporting power-saving signal, to indicate to the UE whether a power-saving signal is applicable to a target cell range, so that the UE can determine, based on the indication information, whether to monitor the power-saving signal. This allows the UE to guarantee its own energy-saving gain while minimizing the impact on other UEs.

To reduce power consumption, NB-IoT and MTC have introduced a wake-up signal (Wake Up Signal, WUS)-based paging procedure. To further improve energy-saving gain, a group wake-up signal-based paging procedure has been further introduced. Wake-up signal- and/or group wake-up signal-based paging is only applicable to UEs.

Wake-up signal- and/or group wake-up signal-based paging is applicable to the cells where the UE enters RRC_IDLE state triggered by the following process:
(1) The UE receives RRCEarlyDataComplete; or
(2) the UE receives RRCConnectionRelease, and the RRCConnectionRelease message does not contain noLastCellUpdate; or
(3) the UE receives an RRCConnectionRelease message containing noLastCellUpdate, and the UE has used (G)WUS before this RRC connection attempt.

If a UE in RRC_IDLE state supports the wake-up signal and the configuration of the wake-up signal is provided in the system information, the UE monitors the WUS according to the WUS parameter provided in the system information. In each DRX cycle, if the UE has detected a WUS before a PO, it will proceed to monitor the upcoming PO; and if the UE has not detected any WUS before the PO, it will skip the monitoring process for the upcoming PO.

To further save power, all UEs sharing the same PO can be grouped based on the paging probability and/or UE_ID. UEs in different groups monitor different group wake-up signals (GWUS), while UEs in the same group on the same PO monitor the same group wake-up signal. If the UE has the capability to detect the group wake-up signal and the system information of the cell where the UE is located provides the configuration information for the group wake-up signal, the UE first monitors the group wake-up signal corresponding to its own group before paging monitoring. If the UE has detected a (G)WUS before a PO, the UE will proceed to monitor the upcoming PO; if the UE has not detected any (G)WUS before the PO, the UE will skip the monitoring process for the upcoming PO.

It should be noted that introducing power-saving signal into NR can achieve energy-saving effects. In addition, existing protocols agree to use the core network to allocate a group for a UE, and the group of the UE remains the same in the registration area of the UE.

The following describes in detail the power-saving signal monitoring method provided in the embodiments of this application by using some embodiments and application scenarios thereof with reference to the accompanying drawings.

An embodiment of this application provides a power-saving signal monitoring method. As shown in FIG. 2, the method includes the following steps 201 to 203:
Step 201: A network-side device transmits indication information to a UE.
Step 202: The UE receives the indication information from the network-side device. Step 203: The UE determines, based on the indication information, whether to monitor a power-saving signal in a current camping cell.

In this embodiment of this application, the foregoing UE supports the power-saving signal, that is, the foregoing UE has the ability to receive/detect/monitor/decode the power-saving signal. The foregoing network-side device supports the power-saving signal, that is, the foregoing network-side device has the ability to transmit/configure/control the power-saving signal.

In this embodiment of this application, the foregoing indication information is used to indicate whether the power-saving signal is applicable to a target cell range.

Optionally, in this embodiment of this application, the foregoing power-saving signal includes any one of the following: a wake-up signal WUS, DCI with CRC scrambled by a power-saving radio network temporary identifier (Power-saving Radio Network Temporary Identifier, PS-RNTI), and a paging early indication PEI.

Optionally, in this embodiment of this application, in a case that the foregoing indication information is used to indicate that the power-saving signal is applicable to the target cell range, if the UE is within the cell range covered by the target cell range, the UE monitors the power-saving signal in the current cell; if the UE is not within the cell range covered by the target cell range, the UE does not monitor the power-saving signal in the current cell, thus reducing power consumption.

Optionally, in this embodiment of this application, in a case that the foregoing indication information indicates that the power-saving signal is not applicable to the target cell range, if the UE is within the cell range covered by the default cell range, the UE monitors the power-saving signal in the current cell; otherwise, if the UE is not within the cell range covered by the default cell range, the UE does not monitor the power-saving signal in the current cell.

Optionally, in this embodiment of this application, the foregoing step 203 may include the following step 203a:
Step 203a: The UE monitors the power-saving signal in a first cell based on the indication information in a case that the UE determines, based on the indication information, to monitor the power-saving signal.

The first cell is the current camping cell and the first cell is determined based on the indication information.

Optionally, in this embodiment of this application, in a case that the foregoing indication information is used to indicate that the power-saving signal is applicable to the target cell range, the foregoing first cell is a cell within the target cell range; and in a case that the foregoing indication information indicates that the power-saving signal is not applicable to the target cell range, the foregoing first cell is a cell within a default cell range.

It should be noted that the foregoing target cell range and the foregoing default cell range may be the same, different, or partially the same.

Optionally, in this embodiment of this application, the foregoing target cell range includes any one of the following:
a cell from which the UE receives the indication information;
a cell last serving by the UE;
a cell in an active area of the UE;
a cell in a tracking area list corresponding to the UE;
a cell in a radio access network notification area corresponding to the UE;
a cell in a radio access network paging area carried in a radio access network RAN paging message received by the UE; and
a cell in a recommended cell list carried in a core network paging message of the UE.

Optionally, in this embodiment of this application, the foregoing default cell range includes any one of the following:
a cell from which the UE receives the indication information;
a cell last serving by the UE;
a cell in an active area of the UE;
a cell in a tracking area list corresponding to the UE;
a cell in a radio access network notification area corresponding to the UE;
a cell in a radio access network paging area carried in a radio access network RAN paging message received by the UE; and
a cell in a recommended cell list carried in a core network paging message of the UE.

Optionally, in this embodiment of this application, the foregoing target cell range is agreed in a protocol, predefined, preconfigured by a network side, or reported by the UE.

Optionally, in this embodiment of this application, the foregoing default cell range is agreed in a protocol, predefined, preconfigured by a network side, or reported by the UE.

Optionally, in this embodiment of this application, the indication information includes an indication identifier and/or a target cell range; where the foregoing indication identifier is used to indicate whether the power-saving signal is applicable to a target cell range.

In one example, the foregoing indication identifier is of BOOLEAN type.

Example 1: When the indication identifier is "false", it indicates that the UE uses the power-saving signal (that is, monitors the power-saving signal) only in a cell within the default cell range; and when the indication identifier is "true", it indicates that the UE can monitor the power-saving signal in a cell within the target cell range.

Example 2: When the indication identifier is "true", it indicates that the UE monitors the power-saving signal only in a cell within the default cell range; and when the indication identifier is "false", it indicates that the UE can monitor the power-saving signal in a cell within the target cell range.

In one example, the foregoing indication identifier is of enumerated type. For example, the indication identifier has only one enumerated element true, then when the UE detects the indication identifier transmitted by the network-side device, the UE can monitor the power-saving signal in a cell within the target cell range; when the network-side device does not transmit the indication identifier, the UE cannot detect the indication identifier, so the UE uses the power-saving signal (that is, monitors the power-saving signal) only in a cell within the default cell range.

Optionally, in this embodiment of this application, the foregoing indication information is specifically used to indicate whether the UE can monitor the power-saving signal in the target cell range.

Optionally, in this embodiment of this application, the foregoing indication information is specifically used to indicate whether a network-side device corresponding to a second cell on which the UE currently camps is able to transmit the power-saving signal to a UE meeting a predetermined condition; where the foregoing second cell is a cell in the target cell range.

In one example, the predetermined condition includes any one of the following that:
a cell last serving by the UE is the second cell;
an active area of the UE includes the second cell;
a tracking area list of the UE includes the second cell;
a radio access network notification area in which the UE is located includes the second cell;
a recommended cell list carried in a core network paging message of the UE includes the second cell; and
a radio access network paging area carried in a RAN paging message of the UE includes the second cell.

An example is provided to illustrate how the indication information is notified to the UE through common signaling. The power-saving signal monitoring method provided in this embodiment of this application may include the following steps:
(1) The UE receives broadcasted system information.
(2) The UE reads the indication identifier in the system information. The indication identifier is used to indicate whether the network-side device corresponding to the current cell is able to transmit a power-saving signal to a UE that satisfies a condition.
   For example, when the indication identifier is "True", it means that the network-side device corresponding to the current cell is able to transmit a power-saving signal to a specific UE (for example, a UE whose last serving cell is not the current cell, or a UE whose active area does not cover the current cell). For example, the current cell may be located in a vast area or in a forest or agricultural area where UEs are relatively sparse. Since the number of UEs in such cells is consistently small, even if the current cell transmits the power-saving signal to the foregoing specific UEs, the overall impact will not be significant. On the contrary, when the indication identifier is "False", it means that the network-side device corresponding to the current cell is unable to transmit a power-saving signal to a specific UE (for example, a UE whose last serving cell is not the current cell, or a UE whose active area does not cover the current cell). For example, if the current cell is located in a densely populated urban area or a factory area where UEs are densely concentrated, due to the large number of UEs in such cells, the power-saving signal will not be transmitted to the foregoing specific UEs in order to reduce the impact on the resident UEs in the current cell.
(3) The UE determines, based on the indication identifier, whether it is necessary to monitor the power-saving signal in the current cell. For example, the indication identifier corresponding to Cell1 indicates that the current cell will only transmit the power-saving signal to a UE whose last serving cell is the current cell. In this way, if UE1 determines that its last serving cell is not Cell1, UE1 monitors the paging physical downlink control channel (Physical downlink control channel, PDCCH) once per DRX cycle during paging monitoring in Cell1; and if UE1 determines that its last serving cell is Cell1, the UE monitors the power-saving signal before monitoring the paging PDCCH, and monitors the paging PDCCH based on the indication of the power-saving signal.

Optionally, in this embodiment of this application, the foregoing step 201 may include the following step 201a, and the foregoing step 202 may include the following step 202a.

Step 201a: The network-side device transmits a target message to the UE.

Step 202a: The UE receives the target message from the network-side device.

The foregoing target message carries the indication information; and the foregoing target message includes at least one of the following: a broadcast message, a power-saving signal, and dedicated signaling.

For example, the dedicated signaling includes at least one of the following: a radio resource control (Radio Resource Control, RRC) release message, a registration accept message, an RRC resume message, an RRC reconfiguration message, and the like.

In one example, the network-side device can notify the UE of the foregoing indication information through a broadcast message, for example, a SIB, which can apply to all UEs residing in the current cell.

In one example, the network-side device can notify the UE of the foregoing indication information through dedicated signaling, for example, an RRC release message or registration accept message, which can apply to a specific UE.

For example, the UE may receive, in the registration accept message, the indication information transmitted by the network side. In this case, the UE also needs to inform the base station of the indication information as INACTIVE assistance information.

For example, the UE may receive in an RRC release (RRC release) message, the indication information transmitted by the network side. In this case, the base station needs to transfer the indication information to the core network.

In one example, the network-side device can notify the UE of the foregoing indication information through the power-saving signal, which can apply to specific UEs.

For example, if the network-side device needs to indicate whether the network-side device corresponding to the current cell is able or not able to transmit the power-saving signal to a UE meeting a specific condition, the network-side device can use system information for indication. If the network-side device needs to inform a specific UE of the target cell range of the power-saving signal, it can inform the UE through dedicated signaling. If the network-side device needs to inform a UE in a specific group of the target cell range of the power-saving signal, the indication information can be carried in the power-saving signal corresponding to the UE in the specific group.

It should be noted that in a case that broadcast message notification and dedicated signaling notification coexist, that is, both of them carry indication information, the indication information carried by dedicated signaling can be followed, meaning that dedicated signaling has higher priority. In a case that no dedicated signaling is configured, the indication information carried in the broadcast message can be followed; if neither is configured, and the power-saving signal does not carry the indication information, the UE monitors the power-saving signal within the default cell range.

In this embodiment of this application, the foregoing target cell range can be configured through at least one of the following: paging information, system information, and dedicated information, and may be transmitted to the UE together with the indication identifier or may be directly agreed in the protocol, which is not limited in the embodiments of this application.

Optionally, in this embodiment of this application, the technical method provided in this embodiment of this application further includes step A1 and step A2:
Step A1: The UE reports first information to the network-side device.
Step A2: The network-side device receives the first information from the UE.

The foregoing first information is used to indicate that the UE expects the power-saving signal to be applicable to a third cell in the target cell range.

For example, in a case that the foregoing indication information is used to indicate that the target signal is applicable to a cell within the target cell range, the UE may report its own active area and/or the preference of the UE for the cells in the target cell range of the power-saving signal. The foregoing active area includes: a cell list, a tracking area list in which the UE is located, a tracking area in which the UE is located, and a radio access network notification area in which the UE is located.

It should be noted that the foregoing preference for cells refers to an expectation of the UE of using the power-saving signal within the target cell range. For example, in a case that the moving range of the UE is relatively fixed and the UE has a high requirement for power saving, the UE can report a preference to indicate that the UE expects to use the power-saving signal in the entire TA area.

For example, the UE may also report to the network-side device the time period and duration or probability of its residence in each active area.

In one example, the foregoing reporting method may include any one of the following:

First, reporting through NAS signaling: for example, during periodic registration or mobility registration, the UE can report the foregoing information to the core network through a registration request message, so that the core network informs the base station of this information as INACTIVE assistance information and the base station uses this information in RAN paging.

Second, reporting through RRC signaling: for example, when the UE is in connected state, the UE can report the information through user assistance information, and the base station transfers the reported information to the core network for use in CN paging. The core network informs the base station of the information as INACTIVE assistance information, and the base station uses the information during RAN paging.

For example, in a case that the network side indicates to the UE whether the power-saving signal is applicable to the target cell range and/or that the UE has reported its own active area, it is not necessary to transmit the indication information through specific signaling. For example, after the UE receives the target cell range, it is agreed in a protocol that the UE uses the power-saving signal in cells within the range, without the need for an indication identifier; or, it is directly agreed that in a case that the UE has reported the active area, the UE uses the power-saving signal in the reported area.

For example, when the UE exits from the connected state and performs cell selection, and the selected cell satisfies the target cell range indicated by the indication information and supports transmitting the power-saving signal. In this case, the UE can monitor the power-saving signal on the target resource in the selected cell, where the power-saving resource includes the time-frequency domain resource and duration for the UE to monitor the power-saving signal. The way for the UE to obtain the target resource includes protocol agreement and/or pre-configuration and/or broadcast signaling configuration of the base station and/or dedicated signaling configuration of the base station.

The UE receives the paging signal based on the power-saving signal. The UE receiving the paging signal based on the power-saving signal includes: having received the power-saving signal (which means having received the paging signal), or the power-saving signal indicating whether to receive the paging signal.

Further, if the UE leaves the current cell and selects another cell and the UE determines that this cell does not meet the applicable range condition of the power-saving signal, the UE does not monitor the power-saving signal in this cell. For example, the UE does not monitor the power-saving signal in this cell and cannot monitor a paging signal based on the power-saving signal, but only wakes up once every DRX cycle to monitor the paging signal.

For example, when the UE exits from the connected state and performs cell reselection, and the selected cell does not meet the applicable range condition of the power-saving signal, the UE does not monitor the target signal in the cell. For example, if the target signal is a power-saving signal, the UE does not monitor the power-saving signal in the cell and cannot monitor a paging signal according to the power-saving signal, but only wakes up once every DRX cycle to monitor the paging signal.

Further, if the UE leaves the foregoing cell and selects another cell and the UE determines that this cell meets the applicable range condition of the power-saving signal, and the cell supports transmitting a power-saving signal, the UE monitors the power-saving signal in this cell. For example, the UE monitors the power-saving signal before monitoring the paging PDCCH in the cell, and monitors the paging PDCCH based on the indication of the power-saving signal.

For example, it is assumed that UE1 monitors the power-saving signal corresponding to the group to which the UE belongs in its last serving cell Cell1. If the indication identifier in the indication information carried in the power-saving signal is used to indicate that all UEs in the group corresponding to the power-saving signal are able to use the power-saving signal in the target cell range 1, for example, UE1 belongs to sub-group1, and the core network indicates to the base station that all UEs in sub-group1 in the registration area need to monitor the power-saving signal in the target cell range 1, then all base stations in the registration area have the indication identifier carried when transmitting the power-saving signal corresponding to sub-group1.

When UE1 performs cell reselection and reselects Cell2, if the indication information received by UE1 in Cell1 indicates that the UE can monitor the power-saving signal in target cell range 1 and that Cell2 in which the power-saving signal is transmitted meets the condition of target cell range 1, UE1 can monitor the power-saving signal in Cell2.

When UE1 receives the power-saving signal in Cell2, if the power-saving signal does not carry the indication identifier or the carried indication identifier indicates that the power-saving signal is used in the target cell range 2, for example, the core network indicates to the base station that UEs of all sub-groups in the registration area can only use the power-saving signal in the last serving cell, then the target cell range 2 indicated by the indication information carried by the power-saving signal in Cell2 is the last serving cell of the UE.

When UE1 leaves Cell2 and selects Cell3, if Cell3 is not the last serving cell of UE1, UE1 does not monitor the power-saving signal in Cell3.

Optionally, in this embodiment of this application, when the network-side device pages UE1, if the last serving cell of UE1 supports the power-saving signal and the last serving cell is within the target cell range of the power-saving signal for UE1, the power-saving signal corresponding to the paged UE is transmitted in the last serving cell of the UE. If the network-side device does not find UE1 through paging in the last serving cell, the network-side device expands the paging area; if the paging area is within the target cell range of the power-saving signal, the network-side device first transmits the power-saving signal before transmitting the paging message; otherwise, it directly transmits the paging message without transmitting the power-saving signal. If the network-side device still does not find UE1 in the expanded paging area, the network-side device pages the UE in the entire RAN paging area corresponding to the paged UE, that is, transmits the power-saving signal in cells within the target cell range of the power-saving signal, not in other cells.

Optionally, in this embodiment of this application, before the foregoing step 201, the technical solution provided in this embodiment of this application further includes step B1.

Step B1: A network-side device determines indication information based on target information.

In one example, the foregoing target information includes at least one of the following: first information, load information of the network-side device itself, geographical location of a cell, power-saving requirement of the UE, power consumption sensitivity of the UE, and latency requirement of the UE. The foregoing first information is used to indicate that the UE expects the power-saving signal to be applicable to a third cell in the target cell range.

Optionally, in this embodiment of this application, the technical solution provided in this embodiment of this application further includes step C:
Step C: The network-side device reports the target cell range and identity information of the UE to a core network device in a case that the foregoing target cell range includes cells within an active area of the UE.

Optionally, in this embodiment of this application, the network-side device reports the relevant identity information of the UE and the indication information to the core network device. For example, when the network-side device determines that the power-saving signal of the UE can only be used in the last serving cell, the indication identifier reported by the network-side device to the core network device is false (for example, the value false indicates that no target cell range needs to be reported); and if the network-side device determines that the power-saving signal of the UE is used not only in the last serving cell, the indication identifier reported by the network-side device to the core network is true (for example, the ture value indicates that the target cell range needs to be reported).

In one example, the network-side device needs to report the target cell range to the core network device in a case that the foregoing target cell range includes cells within an active area of the UE.

In one example, the network-side device does not need to report the target cell range to the core network device in a case that the foregoing target cell range includes the cells listed in the recommended cell list or tracking area list carried in the core network paging message.

In one example, the network-side device receives an NG paging message transmitted by a core network device. For example, if the paging message carries an indication identifier true and the target cell range, the network-side device first transmits the power-saving signal of the UE when paging the UE in a cell included in the target cell range, and directly transmits the paging signal when paging the UE outside the target cell range. If the paging message carries an indication identifier false or does not carry an indication identifier, the UE first transmits a power-saving signal when paging the UE in the default cell range, and directly transmits the paging signal when paging the UE in other cells.

In the power-saving signal monitoring method provided in the embodiment of this application, the network-side device transmits indication information to a UE having the ability to receive the power-saving signal, to indicate to the UE whether the power-saving signal is applicable to the target cell range, so that the UE can determine, based on the indication information, whether to monitor the power-saving signal. This allows the UE to guarantee its own energy-saving gain while minimizing the impact on other UEs.

An embodiment of this application provides a power-saving signal monitoring method. The method includes the following steps 11 and 12.

Step 11: A UE receives indication information transmitted by a network-side device.

Step 12: The UE monitors a power-saving signal in a case that the UE determines that a last serving cell is a first cell based on the indication information; where
the network-side device is a network-side device corresponding to the first cell, and the first cell is a current camping cell.

Optionally, the power-saving signal monitoring method provided in this embodiment of this application further includes the following step 13.

Step 13: The UE does not monitor the power-saving signal in a case that the UE determines that the last serving cell is not the first cell based on the indication information.

Optionally, in this embodiment of this application, before the foregoing step 11, the power-saving signal monitoring method provided in this embodiment of this application further includes the following step 14.

Step 14: The UE receives a target message transmitted by the network-side device.

The target message carries the indication information; and the target message includes at least one of the following: a broadcast message, a power-saving signal, and dedicated signaling.

Optionally, in this embodiment of this application, before the foregoing step 14, the power-saving signal monitoring method provided in this embodiment of this application further includes the following step 15.

Step 15: The UE reports, to the network-side device, the active area of the UE and/or preference information of the UE about cell(s) from which the UE expects to receive the indication information.

Optionally, the power-saving signal monitoring method provided in this embodiment of this application further includes the following step 16.

Step 16: The UE monitors the power-saving signal in a case that the UE does not receive the indication information transmitted by the network-side device and determines that the UE is camping on a cell in a default cell range.

Optionally, in this embodiment of this application, the default cell range includes at least one of the following: cells corresponding to the active area of the UE; and cells corresponding to the tracking area list of the UE.

Optionally, in this embodiment of this application, the power-saving signal includes any one of the following: a wake-up signal WUS, downlink control information DCI with cyclic redundancy check CRC scrambled by power-saving radio network temporary identifier PS-RNTI, and a paging early indication PEI.

An embodiment of this application provides a power-saving signal monitoring method. The method includes the following step 17.

Step 17: A network-side device transmits indication information to a user equipment UE.

In this embodiment of the application, the indication information is used for the UE to monitor a power-saving signal in a case that the UE determines that a last serving cell is a first cell, and the network-side device is a network-side device corresponding to the first cell; where the first cell is a current camping cell and the first cell is determined based on the indication information.

Optionally, in this embodiment of this application, the indication information is further used for the UE to skip monitoring a power-saving signal in a case that the UE determines that a last serving cell is not the first cell.

Optionally, in this embodiment of this application, step 17 may be specifically implemented in the following step 17a.

Step 17a: The network-side device transmits a target message to the user equipment UE.

In this embodiment of this application, the target message carries the indication information; and the target message includes at least one of the following: a broadcast message, a power-saving signal, and dedicated signaling.

Optionally, in this embodiment of this application, step 17 may be specifically implemented in the following step 17b.

Step 17b: The network-side device determines, based on target information, to transmit the indication information to the user equipment UE.

Optionally, in this embodiment of this application, the target information includes at least one of the following: first information, load information of the network-side device itself, geographical location of a cell, power-saving requirement of the UE, power consumption sensitivity of the UE, and latency requirement of the UE.

It should be noted that the power-saving signal monitoring method provided in the embodiments of this application may be performed by a power-saving signal monitoring apparatus or a control module for performing the power-saving signal monitoring method in the power-saving signal monitoring apparatus. In the embodiments of this application, the power-saving signal monitoring apparatus performing the power-saving signal monitoring method is used as an example to describe the power-saving signal monitoring apparatus provided in the embodiments of this application.

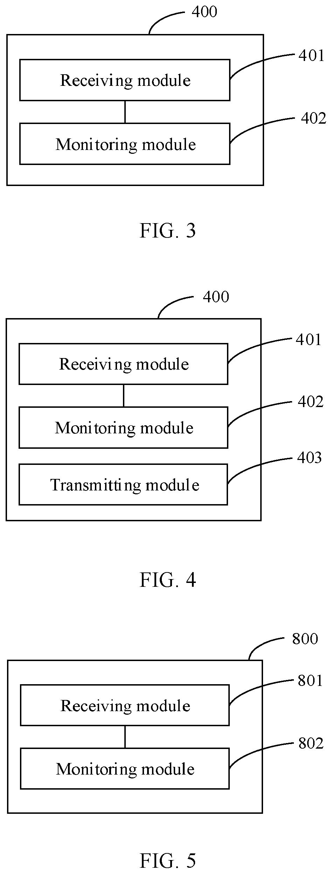

An embodiment of this application provides a power-saving signal monitoring apparatus. The power-saving signal monitoring apparatus is applied to a UE. As shown in FIG. 3, the power-saving signal monitoring apparatus 400 includes a receiving module 401 and a monitoring module 402.

The receiving module 401 is configured to receive indication information from a network-side device, where the indication information is used to indicate whether a power-saving signal is applicable to a target cell range. The monitoring module 402 is configured to determine, based on the indication information received by the receiving module 401, whether to monitor the power-saving signal in a current camping cell.

Optionally, the monitoring module 402 is specifically configured to monitor the power-saving signal in a first cell based on the indication information in a case of determining, based on the indication information, to monitor the power-saving signal. The first cell is the current camping cell and the first cell is determined based on the indication information.

Optionally, in a case that the indication information is used to indicate that the power-saving signal is applicable to the target cell range, the first cell is a cell within the target cell range; or in a case that the indication information is used to indicate that the power-saving signal is not applicable to the target cell range, the first cell is a cell within a default cell range.

Optionally, the target cell range includes any one of the following:
a cell from which the UE receives the indication information;
a cell last serving by the UE;
a cell in an active area of the UE;
a cell in a tracking area list corresponding to the UE;
a cell in a radio access network notification area corresponding to the UE;
a cell in a radio access network paging area carried in a radio access network RAN paging message received by the UE; and
a cell in a recommended cell list carried in a core network paging message of the UE.

Optionally, the default cell range includes any one of the following:
a cell from which the UE receives the indication information;
a cell last serving by the UE;
a cell in an active area of the UE;
a cell in a tracking area list corresponding to the UE;
a cell in a radio access network notification area corresponding to the UE;
a cell in a radio access network paging area carried in a radio access network RAN paging message received by the UE; and
a cell in a recommended cell list carried in a core network paging message of the UE.

Optionally, the target cell range is agreed in a protocol, predefined, preconfigured by a network side, or reported by the UE.

Optionally, the receiving module 401 is specifically configured to receive a target message from the network-side device; where the target message carries the indication information; and the target message includes at least one of the following: a broadcast message, a power-saving signal, an RRC release message, a registration accept message, and other dedicated signaling messages.

Optionally, the indication information is specifically used to indicate whether the UE is able to monitor the power-saving signal in the target cell range.

Optionally, the indication information is specifically used to indicate whether a network-side device corresponding to a second cell on which the UE currently camps is able to transmit the power-saving signal to a UE meeting a predetermined condition; where the second cell is a cell in the target cell range.

Optionally, the predetermined condition includes any one of the following that:
a cell last serving by the UE is the second cell;
an active area of the UE includes the second cell;
a tracking area list of the UE includes the second cell;
a radio access network notification area in which the UE is located includes the second cell;
a recommended cell list carried in a core network paging message of the UE includes the second cell; and
a radio access network paging area carried in a RAN paging message of the UE includes the second cell.

Optionally, the indication information includes an indication identifier and/or the target cell range; where the indication identifier is used to indicate whether the power-saving signal is applicable to the target cell range.

Optionally, the indication identifier is of BOOLEAN type or enumerated type.

Optionally, as shown in FIG. 4, the apparatus 400 further includes a transmitting module 403, where
the transmitting module 403 is configured to report first information to the network-side device; where the first information is used to indicate that the UE expects the power-saving signal to be applicable to a third cell in the target cell range.

Optionally, the power-saving signal includes any one of the following: a WUS, DCI with CRC scrambled by PS-RNTI, and a PEI.

According to the power-saving signal monitoring apparatus provided in this embodiment of this application, after receiving the indication information for indicating whether the power-saving signal is applicable to the target cell range, the apparatus determines, based on the indication information, whether to monitor the power-saving signal. This allows its corresponding UE to guarantee its own energy-saving gain while minimizing the impact on other UEs.

An embodiment of this application provides a power-saving signal monitoring apparatus, where the power-saving signal monitoring apparatus is applied to a UE. As shown in FIG. 5, the power-saving signal monitoring apparatus 800 includes a receiving module 801 and a monitoring module 802.

The receiving module 801 is configured to receive indication information transmitted by a network-side device. The monitoring module 802 is configured to monitor a power-saving signal in a case that the user equipment UE determines that a last serving cell is a first cell based on the indication information; where the network-side device is a network-side device corresponding to the first cell and the first cell is a current camping cell.

Optionally, the monitoring module 802 is further configured to skip monitoring the power-saving signal in a case that the UE determines that the last serving cell is not the first cell based on the indication information.

Optionally, the receiving module 801 is further configured to: before receiving the indication information transmitted by the network-side device, receive a target message transmitted by the network-side device, where the target message carries the indication information, and the target message includes at least one of the following: a broadcast message, a power-saving signal, and dedicated signaling.

Optionally, the apparatus 800 further includes a reporting module, where the reporting module is configured to, before the receiving module receives a target message transmitted by the network-side device, report to the network-side device an active area of the UE and/or preference information of the UE about cell(s) from which the UE expects to receive the indication information.

Optionally, the monitoring module 802 is further configured to monitor the power-saving signal in a case that the UE does not receive the indication information transmitted by the network-side device and determines that the UE is camping on a cell in a default cell range.

Optionally, the default cell range includes at least one of the following:
a cell corresponding to an active area of the UE; and
a cell corresponding to a tracking area list of the UE.

Optionally, the power-saving signal includes any one of the following:
a wake-up signal WUS, downlink control information DCI with cyclic redundancy check CRC scrambled by power-saving radio network temporary identifier PS-RNTI, and a paging early indication PEI.

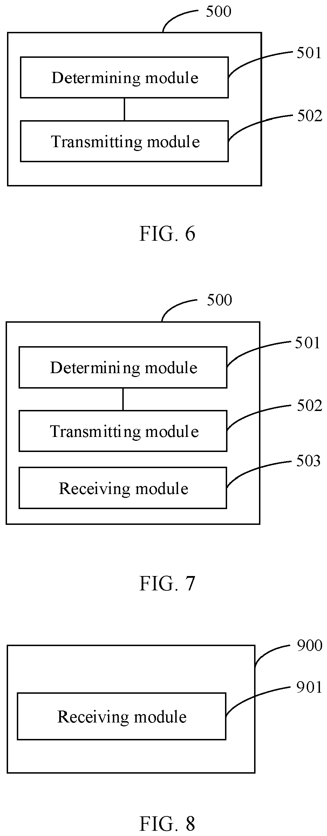

An embodiment of this application provides a power-saving signal monitoring apparatus. As shown in FIG. 6, the power-saving signal monitoring apparatus 500 includes a determining module 501 and a transmitting module 502.

The determining module 501 is configured to determine indication information based on target information; and the transmitting module 502 is configured to transmit the indication information determined by the determining module 501 to a UE; where the indication information is used to indicate whether a power-saving signal is applicable to a target cell range; and the UE has the ability to receive the power-saving signal.

Optionally, the target information includes at least one of the following: first information, load information of a network-side device itself, geographical location of a cell, power-saving requirement of the UE, power consumption sensitivity of the UE, and latency requirement of the UE. The first information is used to indicate that the UE expects the power-saving signal to be applicable to a third cell in the target cell range.

Optionally, as shown in FIG. 7, the apparatus 500 further includes a receiving module 503, where the receiving module 503 is configured to receive the first information from the UE.

Optionally, the target cell range includes any one of the following:
a cell from which the UE receives the indication information;
a cell last serving by the UE;
a cell in an active area of the UE;
a cell in a tracking area list corresponding to the UE;
a cell in a radio access network notification area corresponding to the UE;
a cell in a radio access network paging area carried in a radio access network RAN paging message received by the UE; and
a cell in a recommended cell list carried in a core network paging message of the UE.

Optionally, the target cell range is agreed in a protocol, predefined, preconfigured by a network side, or reported by the UE.

Optionally, the foregoing transmitting module 502 is configured to transmit a target message to the UE; where the target message carries the indication information; and the target message includes at least one of the following: a broadcast message, a power-saving signal, other dedicated signaling, an RRC release message, and a registration accept message.

Optionally, the indication information is specifically used to indicate whether the UE is able to monitor the power-saving signal in the target cell range.

Optionally, the indication information is specifically used to indicate whether a network-side device corresponding to a second cell on which the UE currently camps is able to transmit the power-saving signal to a UE meeting a predetermined condition; where the second cell is a cell in the target cell range.

Optionally, the predetermined condition includes any one of the following that:
a cell last serving by the UE is the second cell;
an active area of the UE includes the second cell;
a tracking area list of the UE includes the second cell;
a radio access network notification area in which the UE is located includes the second cell;
a recommended cell list carried in a core network paging message of the UE includes the second cell; and
a radio access network paging area carried in a RAN paging message of the UE includes the second cell.

Optionally, the indication information includes an indication identifier and/or the target cell range; where the indication identifier is used to indicate whether the power-saving signal is applicable to the target cell range.

Optionally, the indication identifier is of BOOLEAN type or enumerated type.

Optionally, the transmitting module 502 is further configured to report the target cell range and identity information of the UE to a core network device in a case that the target cell range includes cells within an active area of the UE.

Optionally, the power-saving signal includes any one of the following: a WUS, DCI with CRC scrambled by PS-RNTI, and a PEI.

An embodiment of this application provides a power-saving signal monitoring apparatus. As shown in FIG. 8, the power-saving signal monitoring apparatus 900 includes a receiving module 901, where
the receiving module 901 is configured to receive indication information transmitted by a network-side device. The monitoring module 902 is configured to monitor a power-saving signal in a case that the user equipment UE determines that a last serving cell is a first cell based on the indication information; where the network-side device is a network-side device corresponding to the first cell and the first cell is a current camping cell.

Optionally, the monitoring apparatus 900 further includes a monitoring module, where the monitoring module is further configured to skip monitoring the power-saving signal in a case that the UE determines that the last serving cell is not the first cell based on the indication information.

Optionally, the receiving module 901 is further configured to: before receiving the indication information transmitted by the network-side device, receive a target message transmitted by the network-side device, where the target message carries the indication information, and the target message includes at least one of the following: a broadcast message, a power-saving signal, and dedicated signaling.

Optionally, the apparatus 900 further includes a reporting module, where the reporting module is configured to, before the receiving module 901 receives a target message transmitted by the network-side device, report to the network-side device an active area of the UE and/or preference information of the UE about cell(s) from which the UE expects to receive the indication information.

Optionally, the monitoring module 902 is further configured to monitor the power-saving signal in a case that the UE does not receive the indication information transmitted by the network-side device and determines that the UE is camping on a cell in a default cell range.

Optionally, the default cell range includes at least one of the following:
a cell corresponding to an active area of the UE; and
a cell corresponding to a tracking area list of the UE.

Optionally, the power-saving signal includes any one of the following:
a wake-up signal WUS, downlink control information DCI with cyclic redundancy check CRC scrambled by power-saving radio network temporary identifier PS-RNTI, and a paging early indication PEI.

According to the power-saving signal monitoring apparatus provided in this embodiment of this application, the apparatus transmits indication information to the UE, so that after receiving the indication information, the UE can learn whether the power-saving signal is applicable to the target cell range and can further determine, based on the indication information, whether to monitor the power-saving signal. This allows the UE to guarantee its own energy-saving gain while minimizing the impact on other UEs.

The power-saving signal monitoring apparatus in this embodiment of this application may be an apparatus, an apparatus or electronic device with an operating system, or a component, integrated circuit, or chip in a terminal. The apparatus or electronic device may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine, or the like, which is not specifically limited in this embodiment of this application.

The power-saving signal monitoring apparatus provided in this embodiment of this application can implement the processes implemented by the foregoing method embodiment, with the same technical effects achieved. To avoid repetition, details are not described herein again.

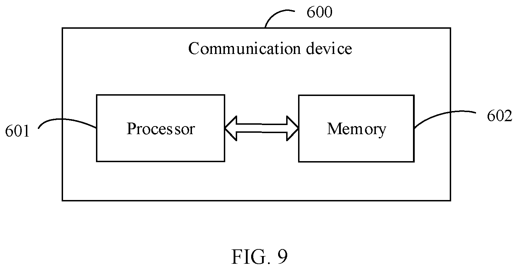

Optionally, as shown in FIG. 9, an embodiment of this application further provides a communications device 600 including a processor 601, a memory 602, and a program or instructions stored in the memory 602 and executable on the processor 601. For example, when the communications device 600 is a terminal, the program or instructions are executed by the processor 601 to implement the processes performed by the UE in the foregoing power-saving signal monitoring method embodiment, with the same technical effects achieved. When the communications device 600 is a network-side device and when the program or the instructions are executed by the processor 601, the processes performed by the network-side device in the foregoing embodiment of the power-saving signal monitoring method are implemented, with the same technical effects achieved. To avoid repetition, details are not described herein again.

An embodiment of this application further provides a terminal, including a processor and a communication interface, where the communication interface is configured to receive indication information from a network-side device, the indication information is used to indicate whether a power-saving signal is applicable to a target cell range, and the UE supports a power-saving signal; and the processor is configured to determine, based on the indication information, whether to monitor the power-saving signal. This terminal embodiment corresponds to the foregoing method embodiment on the terminal side. All implementations in the foregoing method embodiment are applicable to this terminal embodiment, with the same technical effect achieved.

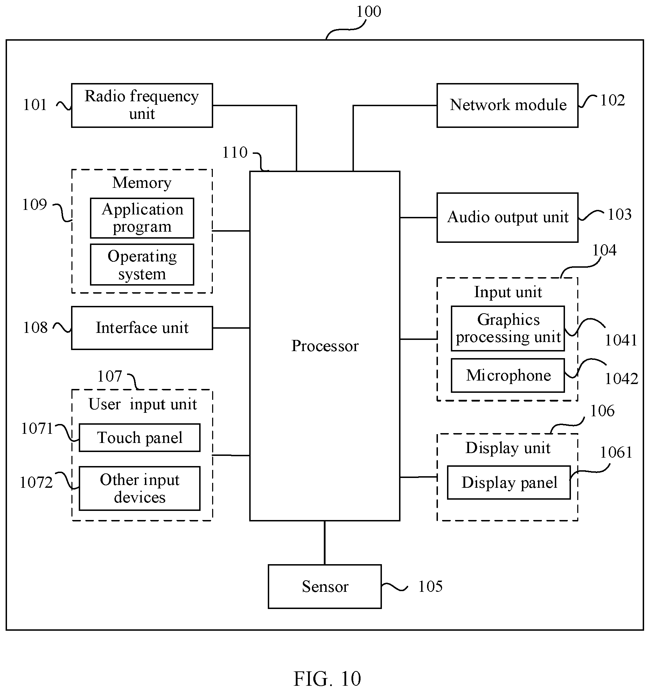

Specifically, taking the terminal being a UE for example, the UE supports the power-saving signal, that is, the UE has the ability to receive/detect/monitor the power-saving signal. As shown in FIG. 10, FIG. 10 is a schematic diagram of a hardware structure of a UE for implementing an embodiment of this application.

The UE100 includes, but is not limited to, at least some of components such as a radio frequency unit 101, a network module 102, an audio output unit 103, an input unit 104, a sensor 105, a display unit 106, a user input unit 107, an interface unit 108, a memory 109, and a processor 110.

It can be understood by those skilled in the art that the UE100 may further include a power supply (for example, a battery) supplying power to the components. The power supply may be logically connected to the processor 110 via a power management system, so that functions such as charge management, discharge management, and power consumption management are implemented by using the power management system. The structure of the UE shown in FIG. 10 does not constitute a limitation on the UE. The UE may include more or fewer components than those shown in the figure, or some components are combined, or component arrangements are different. Details are not described herein again.

It should be understood that in this embodiment of this application, the input unit 104 may include a graphics processing unit (Graphics Processing Unit, GPU) 1041 and a microphone 1042. The graphics processing unit 1041 processes image data of a static picture or a video that is obtained by an image capture apparatus (for example, a camera) in a video capture mode or an image capture mode. The display unit 106 may include a display panel 1061. The display panel 1061 may be configured in a form of a liquid crystal display, an organic light-emitting diode display, or the like. The user input unit 107 includes a touch panel 1071 and other input devices 1072. The touch panel 1071 is also referred to as a touchscreen. The touch panel 1071 may include two parts: a touch detection apparatus and a touch controller. The other input devices 1072 may include but are not limited to a physical keyboard, a functional button (such as a volume control button or a power on/off button), a trackball, a mouse, and a joystick. Details are not described herein.

In this embodiment of this application, the radio frequency unit 101 transmits downlink data received from a network-side device to the processor 110 for processing, and in addition, transmits uplink data to the network-side device. Generally, the radio frequency unit 101 includes but is not limited to an antenna, at least one amplifier, a transceiver, a coupler, a low noise amplifier, a duplexer, and the like.

The memory 109 may be configured to store software programs or instructions and various data. The memory 109 may include a program or instruction storage area and a data storage area. The program or instruction storage area may store an operating system, an application program or instruction required by at least one function (for example, a sound playback function or an image playback function), and the like. Further, the memory 109 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, flash memory device, or other non-volatile solid-state storage devices.

The processor 110 may include one or more processing units. Optionally, the processor 110 may integrate an application processor and a modem processor. The application processor mainly processes an operating system, a user interface, application programs or instructions, and the like. The modem processor mainly processes wireless communication, for example, being a baseband processor. It can be understood that the modem processor may alternatively be not integrated in the processor 110.

In a case that UE100 is the UE described in steps 201 to 203:
the radio frequency unit 101 is configured to receive indication information from a network-side device, where the indication information is used to indicate whether a power-saving signal is applicable to a target cell range; and the processor 110 is configured to determine, based on the indication information received by the radio frequency unit 101, whether to monitor a power-saving signal in a current camping cell.

Optionally, the foregoing processor 110 is specifically configured to monitor the power-saving signal in a first cell based on the indication information in a case that the UE determines, based on the indication information, to monitor the power-saving signal. The first cell is the current camping cell and the first cell is determined based on the indication information.

Optionally, in a case that the indication information is used to indicate that the power-saving signal is applicable to the target cell range, the first cell is a cell within the target cell range; or
in a case that the indication information is used to indicate that the power-saving signal is not applicable to the target cell range, the first cell is a cell within a default cell range.

Optionally, the target cell range includes any one of the following:
a cell from which the UE receives the indication information;
a cell last serving by the UE;
a cell in an active area of the UE;
a cell in a tracking area list corresponding to the UE;
a cell in a radio access network notification area corresponding to the UE;
a cell in a radio access network paging area carried in a radio access network RAN paging message received by the UE; and
a cell in a recommended cell list carried in a core network paging message of the UE.

Optionally, the default cell range includes any one of the following:
a cell from which the UE receives the indication information;
a cell last serving by the UE;
a cell in an active area of the UE;
a cell in a tracking area list corresponding to the UE;
a cell in a radio access network notification area corresponding to the UE;
a cell in a radio access network paging area carried in a radio access network RAN paging message received by the UE; and
a cell in a recommended cell list carried in a core network paging message of the UE.

Optionally, the target cell range is agreed in a protocol, predefined, preconfigured by a network side, or reported by the UE.

Optionally, the radio frequency unit 101 is specifically configured to receive a target message from the network-side device; where the target message carries the indication information; and the target message includes at least one of the following: a broadcast message, a power-saving signal, dedicated signaling, an RRC release message, and a registration accept message.

Optionally, the indication information is specifically used to indicate whether the UE is able to monitor the power-saving signal in the target cell range.

Optionally, the indication information is specifically used to indicate whether a network-side device corresponding to a second cell on which the UE currently camps is able to transmit the power-saving signal to a UE meeting a predetermined condition; where the second cell is a cell in the target cell range.

Optionally, the predetermined condition includes any one of the following that:
a cell last serving by the UE is the second cell;
an active area of the UE includes the second cell;
a tracking area list of the UE includes the second cell;
a radio access network notification area in which the UE is located includes the second cell;
a recommended cell list carried in a core network paging message of the UE includes the second cell; and
a radio access network paging area carried in a RAN paging message of the UE includes the second cell.

Optionally, the indication information includes an indication identifier and/or the target cell range; where the indication identifier is used to indicate whether the power-saving signal is applicable to the target cell range.

Optionally, the indication identifier is of BOOLEAN type or enumerated type.

Optionally, the radio frequency unit 101 is further configured to report first information to the network-side device, where the first information is used to indicate that the UE expects the power-saving signal to be applicable to a third cell in the target cell range.

Optionally, the power-saving signal includes any one of the following: a wake-up signal WUS, DCI with CRC scrambled by PS-RNTI, and a paging early indication PEI.

In a case that the UE100 is the UE described in steps 11 and 12:
the radio frequency unit 101 is configured to receive indication information transmitted by a network-side device; and the processor 110 is configured to monitor a power-saving signal in a case that the user equipment UE determines that a last serving cell is a first cell based on the indication information; where the network-side device is a network-side device corresponding to the first cell and the first cell is a current camping cell.

Optionally, the processor 110 is further configured to skip monitoring the power-saving signal in a case that the UE determines that the last serving cell is not the first cell based on the indication information.

Optionally, the radio frequency unit 101 is further configured to: before receiving the indication information transmitted by the network-side device, receive a target message transmitted by the network-side device, where the target message carries the indication information, and the target message includes at least one of the following: a broadcast message, a power-saving signal, and dedicated signaling.

Optionally, the apparatus 700 further includes a radio frequency unit 101, where the radio frequency unit 101 is configured to, before the radio frequency unit 101 receives the target message transmitted by the network-side device, report to the network-side device an active area of the UE and/or preference information of the UE about cell(s) from which the UE expects to receive the indication information.

Optionally, the processor 110 is further configured to monitor the power-saving signal in a case that the UE does not receive the indication information transmitted by the network-side device and determines that the UE is camping on a cell in a default cell range.

Optionally, the default cell range includes at least one of the following:
a cell corresponding to an active area of the UE; and
a cell corresponding to a tracking area list of the UE.

Optionally, the power-saving signal includes any one of the following:
a wake-up signal WUS, downlink control information DCI with cyclic redundancy check CRC scrambled by power-saving radio network temporary identifier PS-RNTI, and a paging early indication PEI.

According to the UE provided in this embodiment of this application, after receiving the indication information for indicating whether the power-saving signal is applicable to the target cell range, the UE determines, based on the indication information, whether to monitor the power-saving signal. This allows the UE to guarantee its own energy-saving gain while minimizing the impact on other UEs.

An embodiment of this application further provides a network-side device, including a processor and a communication interface, where the processor is configured to determine indication information based on target information, and the communication interface is configured to transmit the indication information to a UE; where the indication information is used to indicate whether a power-saving signal is applicable to a target cell range, and the UE has the ability to receive the power-saving signal. This network-side device embodiment corresponds to the foregoing network-side device method embodiment. All processes and implementations in the foregoing method embodiment are applicable to this network-side device embodiment, with the same technical effects achieved.

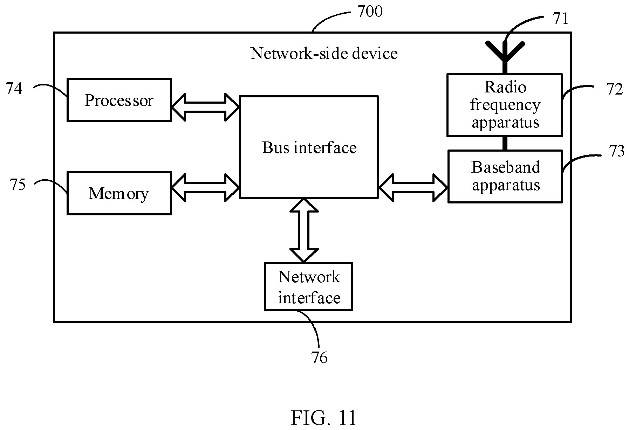

Specifically, an embodiment of this application further provides a network-side device. The network-side device supports the power-saving signal, that is, the network-side device has the ability to transmit/configure/control the power-saving signal. As shown in FIG. 11, the network device 700 includes an antenna 71, a radio frequency apparatus 72, and a baseband apparatus 73. The antenna 71 is connected to the radio frequency apparatus 72. In an uplink direction, the radio frequency apparatus 72 receives information by using the antenna 71, and sends the received information to the baseband apparatus 73 for processing. In a downlink direction, the baseband apparatus 73 processes to-be-sent information, and sends the information to the radio frequency apparatus 72; and the radio frequency apparatus 72 processes the received information and then sends the information out by using the antenna 71.

The frequency band processing apparatus may be located in the baseband apparatus 73. The method performed by the network-side device in the foregoing embodiments may be implemented in the baseband apparatus 73, and the baseband apparatus 73 includes a processor 74 and a memory 75.

The baseband apparatus 73 may include, for example, at least one baseband processing unit, where multiple chips are disposed on the baseband processing unit. As shown in FIG. 11, one of the chips is, for example, the processor 74, connected to the memory 75, to invoke a program in the memory 75 to perform the operation of the network device shown in the foregoing method embodiment.

The baseband apparatus 73 may further include a network interface 76 configured to exchange information with the radio frequency apparatus 72, where the interface is, for example, a common public radio interface (common public radio interface, CPRI for short).

In a case that the network device 700 is the network device described in step B1:
the processor 74 is configured to determine indication information based on target information; and the radio frequency apparatus 72 is configured to transmit the indication information determined by the processor 74 to a UE; where the indication information is used to indicate whether a power-saving signal is applicable to a target cell range, and the UE supports the power-saving signal.

Optionally, the target information includes at least one of the following: first information, load information of the network-side device itself, geographical location of a cell, power-saving requirement of the UE, power consumption sensitivity of the UE, and latency requirement of the UE; where
the first information is used to indicate that the UE expects the power-saving signal to be applicable to a third cell in the target cell range.

Optionally, the radio frequency apparatus 72 is configured to receive the first information from the UE.

Optionally, the radio frequency apparatus 72 is specifically configured to transmit a target message to the UE; where the target message carries the indication information; and the target message includes at least one of the following: a broadcast message, a power-saving signal, an RRC release message, a registration accept message, and other dedicated signaling.

Optionally, the radio frequency apparatus 72 is configured to report the target cell range and identity information of the UE to a core network device in a case that the target cell range includes cells within an active area of the UE.

Optionally, the target cell range includes any one of the following:
a cell from which the UE receives the indication information;
a cell last serving by the UE;
a cell in an active area of the UE;
a cell in a tracking area list corresponding to the UE;
a cell in a radio access network notification area corresponding to the UE;
a cell in a radio access network paging area carried in a radio access network RAN paging message received by the UE; and
a cell in a recommended cell list carried in a core network paging message of the UE.

Optionally, the target cell range is agreed in a protocol, predefined, preconfigured by a network side, or reported by the UE.

Optionally, the power-saving signal includes any one of the following: a WUS, DCI with CRC scrambled by PS-RNTI, and a PEI.

In a case that the network device 700 is the network device described in step 17:
the radio frequency apparatus 72 is configured to receive indication information transmitted by the network-side device; and the processor 74 is configured to monitor a power-saving signal in a case that the user equipment UE determines that a last serving cell is a first cell based on the indication information; where the network-side device is a network-side device corresponding to the first cell and the first cell is a current camping cell.

Optionally, the processor 74 is further configured to skip monitoring the power-saving signal in a case that the UE determines that the last serving cell is not the first cell based on the indication information.

Optionally, the radio frequency apparatus 72 is further configured to: before receiving the indication information transmitted by the network-side device, receive a target message transmitted by the network-side device, where the target message carries the indication information, and the target message includes at least one of the following: a broadcast message, a power-saving signal, and dedicated signaling.

Optionally, the apparatus 800 further includes a reporting module, where the reporting module is configured to, before the radio frequency apparatus 72 receives a target message transmitted by the network-side device, report to the network-side device an active area of the UE and/or preference information of the UE about cell(s) from which the UE expects to receive the indication information.

Optionally, the processor 74 is further configured to monitor the power-saving signal in a case that the UE does not receive the indication information transmitted by the network-side device and determines that the UE is camping on a cell in a default cell range.

Optionally, the default cell range includes at least one of the following:
a cell corresponding to an active area of the UE; and
a cell corresponding to a tracking area list of the UE.

Optionally, the power-saving signal includes any one of the following:
a wake-up signal WUS, downlink control information DCI with cyclic redundancy check CRC scrambled by power-saving radio network temporary identifier PS-RNTI, and a paging early indication PEI.

Specifically, the network-side device in this embodiment of the present invention further includes instructions or a program stored in the memory 75 and executable on the processor 74. The processor 74 invokes the instructions or program in the memory 75 to perform the method performed by the foregoing modules, with the same technical effects achieved. To avoid repetition, details are not described herein again.

An embodiment of this application further provides a readable storage medium. The readable storage medium stores a program or instructions. When the program or instructions are executed by a processor, each process of the foregoing power-saving signal monitoring method embodiment is implemented, with the same technical effects achieved. To avoid repetition, details are not described herein again.

The processor is a processor in the terminal described in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip. The chip includes a processor and a communication interface. The communication interface is coupled to the processor. The processor is configured to run a program or instructions to implement each process of the foregoing power-saving signal monitoring method embodiment, with the same technical effect achieved. To avoid repetition, details are not described herein again.

It should be understood that the chip mentioned in the embodiments of this application may also be referred to as a system-level chip, a system chip, a chip system, a system-on-chip, or the like.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A power-saving signal monitoring method, comprising:
receiving, by a user equipment UE, indication information from a network-side device, wherein the indication information is used to indicate whether a power-saving signal is applicable to a target cell range, and the UE supports the power-saving signal; and
determining, by the UE based on the indication information, whether to monitor the power-saving signal in a current camping cell.

2. The method according to claim 1, wherein the determining, by the UE based on the indication information, whether to monitor the power-saving signal comprises:
monitoring, by the UE, the power-saving signal in a first cell based on the indication information in a case that the UE determines, based on the indication information, to monitor the power-saving signal; wherein
the first cell is the current camping cell and the first cell is determined based on the indication information.

3. The method according to claim 1, wherein
in a case that the indication information is used to indicate that the power-saving signal is applicable to the target cell range, the first cell is a cell within the target cell range; or
in a case that the indication information is used to indicate that the power-saving signal is not applicable to the target cell range, the first cell is a cell within a default cell range.

4. The method according to claim 3, wherein the target cell range comprises any one of following:
a cell from which the UE receives the indication information;
a cell last serving by the UE;
a cell in an active area of the UE;
a cell in a tracking area list corresponding to the UE;
a cell in a radio access network notification area corresponding to the UE;
a cell in a radio access network paging area carried in a radio access network RAN paging message received by the UE; and
a cell in a recommended cell list carried in a core network paging message of the UE.

5. The method according to claim 3, wherein the default cell range comprises any one of following:
a cell from which the UE receives the indication information;
a cell last serving by the UE;
a cell in an active area of the UE;
a cell in a tracking area list corresponding to the UE;
a cell in a radio access network notification area corresponding to the UE;
a cell in a radio access network paging area carried in a radio access network RAN paging message received by the UE; and
a cell in a recommended cell list carried in a core network paging message of the UE.

6. The method according to claim 3, wherein the target cell range is agreed in a protocol, predefined, preconfigured by a network side, or reported by the UE.

7. The method according to claim 1, wherein the receiving, by a UE, indication information from a network-side device comprises:
receiving, by the UE, a target message from the network-side device; wherein
the target message carries the indication information; and
the target message comprises at least one of following: a broadcast message, a power-saving signal, a radio resource control RRC release message, a registration accept message, and other dedicated signaling.

8. The method according to claim 3, wherein the indication information is specifically used to indicate whether the UE is able to monitor the power-saving signal in the target cell range.

9. The method according to claim 3, wherein the indication information is specifically used to indicate whether a network-side device corresponding to a second cell on which the UE currently camps is able to transmit the power-saving signal to a UE meeting a predetermined condition; wherein
the second cell is a cell in the target cell range.

10. The method according to claim 9, wherein
the predetermined condition comprises any one of following that:
a cell last serving by the UE is the second cell;
an active area of the UE comprises the second cell;
a tracking area list of the UE comprises the second cell;
a radio access network notification area in which the UE is located comprises the second cell;
a recommended cell list carried in a core network paging message of the UE comprises the second cell; and
a radio access network paging area carried in a RAN paging message of the UE comprises the second cell.

11. The method according to any one of claims 1 to 10, wherein the indication information comprises an indication identifier and/or the target cell range; wherein
the indication identifier is used to indicate whether the power-saving signal is applicable to the target cell range.

12. The method according to claim 11, wherein the indication identifier is of BOOLEAN type or enumerated type.

13. The method according to claim 1, wherein the method further comprises:
reporting, by the UE, first information to the network-side device; wherein
the first information is used to indicate that the UE expects the power-saving signal to be applicable to a third cell in the target cell range.

14. The method according to claim 1, wherein the power-saving signal comprises any one of following: a wake-up signal WUS, downlink control information DCI with cyclic redundancy check CRC scrambled by power-saving radio network temporary identifier PS-RNTI, and a paging early indication PEI.

15. A power-saving signal monitoring method, comprising:
receiving, by a user equipment UE, indication information transmitted by a network-side device; and
monitoring, by the UE, a power-saving signal in a case that the UE determines that a last serving cell is a first cell based on the indication information; wherein
the network-side device is a network-side device corresponding to the first cell, and the first cell is a current camping cell.

16. The method according to claim 15, wherein the method further comprises:
skipping monitoring, by the UE, the power-saving signal in a case that the UE determines that the last serving cell is not the first cell based on the indication information.

17. The method according to claim 15 or 16, wherein before the receiving, by a user equipment UE, indication information transmitted by a network-side device, the method further comprises:
receiving, by the UE, a target message transmitted by the network-side device, wherein the target message carries the indication information and the target message comprises at least one of following: a broadcast message, a power-saving signal, and dedicated signaling.

18. The method according to claim 17, wherein before the receiving, by the UE, a target message transmitted by the network-side device, the method further comprises:
reporting, by the UE to the network-side device, an active area of the UE and/or preference information of the UE about cell(s) from which the UE expects to receive the indication information.

19. The method according to claim 15, wherein the method further comprises:
monitoring, by the UE, the power-saving signal in a case that the UE does not receive the indication information transmitted by the network-side device and determines that the UE is camping on a cell in a default cell range.

20. The method according to claim 19, wherein the default cell range comprises at least one of following:
a cell corresponding to an active area of the UE; and
a cell corresponding to a tracking area list of the UE.

21. The method according to any one of claims 15 to 20, wherein the power-saving signal comprises any one of following:
a wake-up signal WUS, downlink control information DCI with cyclic redundancy check CRC scrambled by power-saving radio network temporary identifier PS-RNTI, and a paging early indication PEI.

22. A power-saving signal monitoring method, comprising:
determining, by a network-side device, indication information based on target information; and
transmitting, by the network-side device, the indication information to a UE; wherein
the indication information is used to indicate whether a power-saving signal is applicable to a target cell range;
the UE supports the power-saving signal; and
the network-side device supports the power-saving signal.

23. The method according to claim 22, wherein the target information comprises at least one of following: first information, load information of the network-side device itself, geographical location of a cell, power-saving requirement of the UE, power consumption sensitivity of the UE, and latency requirement of the UE; wherein
the first information is used to indicate that the UE expects the power-saving signal to be applicable to a third cell in the target cell range.

24. The method according to claim 23, wherein before the determining, by a network-side device, indication information based on target information, the method further comprises:
receiving, by the network-side device, the first information from the UE.

25. The method according to claim 22, wherein the target cell range comprises any one of following:
a cell from which the UE receives the indication information;
a cell last serving by the UE;
a cell in an active area of the UE;
a cell in a tracking area list corresponding to the UE;
a cell in a radio access network notification area corresponding to the UE;
a cell in a radio access network paging area carried in a radio access network RAN paging message received by the UE; and
a cell in a recommended cell list carried in a core network paging message of the UE.

26. The method according to claim 22, wherein the target cell range is agreed in a protocol, predefined, preconfigured by a network side, or reported by the UE.

27. The method according to claim 22, wherein the transmitting, by the network-side device, the indication information to the UE comprises:
transmitting, by the network-side device, a target message to the UE; wherein
the target message carries the indication information; and
the target message comprises at least one of following: a broadcast message, a power-saving signal, an RRC release message, a registration accept message, and other dedicated signaling.

28. The method according to claim 22, wherein the indication information is specifically used to indicate whether the UE is able to monitor the power-saving signal in the target cell range.

29. The method according to claim 22, wherein the indication information is specifically used to indicate whether a network-side device corresponding to a second cell on which the UE currently camps is able to transmit the power-saving signal to a UE meeting a predetermined condition; wherein
the second cell is a cell in the target cell range.

30. The method according to claim 29, wherein
the predetermined condition comprises any one of following that:
a cell last serving by the UE is the second cell;
an active area of the UE comprises the second cell;
a tracking area list of the UE comprises the second cell;
a radio access network notification area in which the UE is located comprises the second cell;
a recommended cell list carried in a core network paging message of the UE comprises the second cell; and
a radio access network paging area carried in a RAN paging message of the UE comprises the second cell.

31. The method according to any one of claims 22 to 30, wherein the indication information comprises an indication identifier and/or the target cell range; wherein
the indication identifier is used to indicate whether the power-saving signal is applicable to the target cell range.

32. The method according to claim 31, wherein the indication identifier is of BOOLEAN type or enumerated type.

33. The method according to claim 22, wherein the method further comprises:
reporting, by the network-side device, the target cell range and identity information of the UE to a core network device in a case that the target cell range comprises cells within an active area of the UE.

34. The method according to claim 22, wherein the power-saving signal comprises any one of following: a WUS, DCI with CRC scrambled by PS-RNTI, and a PEI.

35. A power-saving signal monitoring method, comprising:
transmitting, by a network-side device, indication information to a user equipment UE, wherein the indication information is used for the UE to monitor a power-saving signal in a case that the UE determines that a last serving cell is a first cell, and the network-side device is a network-side device corresponding to the first cell; wherein
the first cell is a current camping cell and the first cell is determined based on the indication information.

36. The method according to claim 35, wherein the indication information is further used for the UE to skip monitoring the power-saving signal in a case that the UE determines that the last serving cell is not the first cell.

37. The method according to claim 35 or 36, wherein the transmitting, by a network-side device, indication information to a user equipment UE comprises:
transmitting, by the network-side device, a target message to the user equipment UE, wherein the target message carries the indication information and the target message comprises at least one of following: a broadcast message, a power-saving signal, and dedicated signaling.

38. The method according to claim 35, wherein the transmitting, by a network-side device, indication information to a user equipment UE comprises:
determining, by the network-side device, to transmit the indication information to the user equipment UE based on target information; wherein
the target information comprises at least one of following: first information, load information of the network-side device itself, geographical location of a cell, power-saving requirement of the UE, power consumption sensitivity of the UE, and latency requirement of the UE.

39. A power-saving signal monitoring apparatus, comprising:
a receiving module, configured to receive indication information from a network-side device, wherein the indication information is used to indicate whether a power-saving signal is applicable to a target cell range; and
a monitoring module, configured to determine, based on the indication information received by the receiving module, whether to monitor the power-saving signal in a current camping cell.

40. The apparatus according to claim 39, wherein the monitoring module is specifically configured to:
monitor the power-saving signal in a first cell based on the indication information in a case of determining, based on the indication information received by the receiving module, to monitor the power-saving signal; wherein
the first cell is the current camping cell and the first cell is determined based on the indication information.

41. The apparatus according to claim 40, wherein
in a case that the indication information is used to indicate that the power-saving signal is applicable to the target cell range, the first cell is a cell within the target cell range; or
in a case that the indication information is used to indicate that the power-saving signal is not applicable to the target cell range, the first cell is a cell within a default cell range.

42. The apparatus according to claim 41, wherein the target cell range comprises any one of following:
a cell from which the UE receives the indication information;
a cell last serving by the UE;
a cell in an active area of the UE;
a cell in a tracking area list corresponding to the UE;
a cell in a radio access network notification area corresponding to the UE;
a cell in a radio access network paging area carried in a radio access network RAN paging message received by the UE; and
a cell in a recommended cell list carried in a core network paging message of the UE.

43. The apparatus according to claim 41, wherein the default cell range comprises any one of following:
a cell from which the UE receives the indication information;
a cell last serving by the UE;
a cell in an active area of the UE;
a cell in a tracking area list corresponding to the UE;
a cell in a radio access network notification area corresponding to the UE;
a cell in a radio access network paging area carried in a radio access network RAN paging message received by the UE; and
a cell in a recommended cell list carried in a core network paging message of the UE.

44. The apparatus according to claim 41, wherein the target cell range is agreed in a protocol, predefined, preconfigured by a network side, or reported by the UE.

45. The apparatus according to claim 39, wherein the receiving module is specifically configured to receive a target message from the network-side device:
the target message carries the indication information; and
the target message comprises at least one of following: a broadcast message, a power-saving signal, a radio resource control RRC release message, a registration accept message, and other dedicated signaling.

46. The apparatus according to claim 41, wherein the indication information is specifically used to indicate whether the UE is able to monitor the power-saving signal in the target cell range.

47. The apparatus according to claim 41, wherein the indication information is specifically used to indicate whether a network-side device corresponding to a second cell on which the UE currently camps is able to transmit the power-saving signal to a UE meeting a predetermined condition; wherein
the second cell is a cell in the target cell range.

48. The apparatus according to claim 47, wherein
the predetermined condition comprises any one of following that:
a cell last serving by the UE is the second cell;
an active area of the UE comprises the second cell;
a tracking area list of the UE comprises the second cell;
a radio access network notification area in which the UE is located comprises the second cell;
a recommended cell list carried in a core network paging message of the UE comprises the second cell; and
a radio access network paging area carried in a RAN paging message of the UE comprises the second cell.

49. The apparatus according to any one of claims 39 to 48, wherein the indication information comprises an indication identifier and/or the target cell range; wherein
the indication identifier is used to indicate whether the power-saving signal is applicable to the target cell range.

50. The apparatus according to claim 49, wherein the indication identifier is of BOOLEAN type or enumerated type.

51. The apparatus according to claim 39, wherein the apparatus further comprises:
a transmitting module, configured to report first information to the network-side device; wherein
the first information is used to indicate that the UE expects the power-saving signal to be applicable to a third cell in the target cell range.

52. The apparatus according to claim 39, wherein the power-saving signal comprises any one of following: a wake-up signal WUS, downlink control information DCI with cyclic redundancy check CRC scrambled by power-saving radio network temporary identifier PS-RNTI, and a paging early indication PEI.

53. A power-saving signal monitoring apparatus, comprising a receiving module and a monitoring module; wherein
the receiving module is configured to receive indication information transmitted by a network-side device; and
the monitoring module is configured to monitor a power-saving signal in a case that a user equipment UE determines that a last serving cell is a first cell based on the indication information; wherein
the network-side device is a network-side device corresponding to the first cell, and the first cell is a current camping cell.

54. The apparatus according to claim 53, wherein
the monitoring module is further configured to skip monitoring the power-saving signal in a case that the UE determines that the last serving cell is not the first cell based on the indication information.

55. The apparatus according to claim 53 or 54, wherein
the receiving module is further configured to: before receiving the indication information transmitted by the network-side device, receive a target message transmitted by the network-side device, wherein the target message carries the indication information, and the target message comprises at least one of following: a broadcast message, a power-saving signal, and dedicated signaling.

56. The apparatus according to claim 53, wherein the apparatus further comprises a reporting module; wherein
the reporting module is configured to report, to the network-side device before the receiving module receives a target message transmitted by the network-side device, an active area of the UE and/or preference information of the UE about cell(s) from which the UE expects to receive the indication information.

57. The apparatus according to claim 53, wherein
the monitoring module is further configured to monitor the power-saving signal in a case that the UE does not receive the indication information transmitted by the network-side device and determines that the UE is camping on a cell in a default cell range.

58. The apparatus according to claim 57, wherein the default cell range comprises at least one of following:
a cell corresponding to an active area of the UE; and
a cell corresponding to a tracking area list of the UE.

59. The apparatus according to any one of claims 53 to 58, wherein the power-saving signal comprises any one of following:
a wake-up signal WUS, downlink control information DCI with cyclic redundancy check CRC scrambled by power-saving radio network temporary identifier PS-RNTI, and a paging early indication PEI.

60. A power-saving signal monitoring apparatus, comprising:
a determining module, configured to determine indication information based on target information; and
a transmitting module, configured to transmit the indication information determined by the determining module to a UE; wherein
the indication information is used to indicate whether a power-saving signal is applicable to a target cell range; and
the UE supports the power-saving signal.

61. The apparatus according to claim 60, wherein the target information comprises at least one of following: first information, load information of a network-side device itself, geographical location of a cell, power-saving requirement of the UE, power consumption sensitivity of the UE, and latency requirement of the UE; wherein
the first information is used to indicate that the UE expects the power-saving signal to be applicable to a third cell in the target cell range.

62. The apparatus according to claim 61, wherein the apparatus further comprises:
a receiving module, configured to receive the first information from the UE.

63. The apparatus according to claim 60, wherein the transmitting module is specifically configured to transmit a target message to the UE; wherein
the target message carries the indication information; and
the target message comprises at least one of following: a broadcast message, a power-saving signal, an RRC release message, a registration accept message, and other dedicated signaling.

64. The apparatus according to claim 60, wherein the apparatus further comprises:
a transmitting module, configured to report the target cell range and identity information of the UE to a core network device in a case that the target cell range comprises cells within an active area of the UE.

65. A power-saving signal monitoring apparatus, comprising a transmitting module, wherein
the transmitting module is configured to transmit indication information to a user equipment UE, wherein the indication information is used for the UE to monitor a power-saving signal in a case of determining that a last serving cell is a first cell, and a network-side device is a network-side device corresponding to the first cell; wherein
the first cell is the current camping cell and the first cell is determined based on the indication information.

66. The apparatus according to claim 65, wherein the indication information is further used for the UE to skip monitoring the power-saving signal in a case of determining that the last serving cell is not the first cell.

67. The apparatus according to claim 65 or 66, wherein the transmitting module is specifically configured to transmit a target message to the user equipment UE, wherein the target message carries the indication information, and the target message comprises at least one of following: a broadcast message, a power-saving signal, and dedicated signaling.

68. The apparatus according to claim 65, wherein the transmitting module is specifically configured to determine, based on target information, to transmit the indication information to the user equipment UE; wherein
the target information comprises at least one of following: first information, load information of the network-side device itself, geographical location of a cell, power-saving requirement of the UE, power consumption sensitivity of the UE, and latency requirement of the UE.

69. A UE, comprising a processor, a memory, and a program or instructions stored in the memory and executable on the processor, wherein when the program or instructions are executed by the processor, steps of the power-saving signal monitoring method according to any one of claims 1 to 14 are implemented; or steps of the power-saving signal monitoring method according to any one of claims 15 to 21 are implemented.

70. A network-side device, comprising a processor, a memory, and a program or instructions stored in the memory and executable on the processor, wherein when the program or instructions are executed by the processor, steps of the power-saving signal monitoring method according to any one of claims 22 to 34 are implemented; or steps of the power-saving signal monitoring method according to any one of claims 35 to 38 are implemented.

71. A readable storage medium, wherein a program or instructions are stored in the readable storage medium; and when the program or the instructions are executed by a processor, steps of the power-saving signal monitoring method according to any one of claims 1 to 14 are implemented; steps of the power-saving signal monitoring method according to any one of claims 15 to 21 are implemented; steps of the power-saving signal monitoring method according to any one of claims 22 to 34 are implemented; or steps of the power-saving signal monitoring method according to any one of claims 35 to 38 are implemented.

72. A computer program product, wherein the program product is executed by at least one processor to implement steps of the power-saving signal monitoring method according to any one of claims 1 to 14; steps of the power-saving signal monitoring method according to any one of claims 15 to 21; steps of the power-saving signal monitoring method according to any one of claims 22 to 34; or steps of the power-saving signal monitoring method according to any one of claims 35 to 38.

73. A chip, wherein the chip comprises a processor and a communication interface, the communication interface is coupled to the processor, and the processor is configured to run a program or instructions to implement steps of the power-saving signal monitoring method according to any one of claims 1 to 14; steps of the power-saving signal monitoring method according to any one of claims 15 to 21; steps of the power-saving signal monitoring method according to any one of claims 22 to 34; or steps of the power-saving signal monitoring method according to any one of claims 35 to 38.
